# EUROPEAN PATENT SPECIFICATION

(11) **EP 4 355 521 B1**
(45) Date of publication and mention of the grant of the patent: **30.09.2026**
(21) Application number: 22741897.7
(22) Date of filing: 15.06.2022
(51) Int. Cl.: B23K 23/00

(54) **EXOTHERMIC WELDING SYSTEM**
EXOTHERMES SCHWEISSSYSTEM
SYSTÈME DE SOUDAGE EXOTHERMIQUE

(30) Priority: 15.06.2021 US 202163210653 P
(43) Date of publication of application: 24.04.2024
(73) Proprietor: Erico International Corporation, Solon, OH 44139 (US)
(72) Inventor: TURNER, Nicholas, North Royalton, OH 44133 (US); BUEHMAN, Erika, Cleveland, OH 44111 (US); MARTINJAK, Greg, Solon, OH 44139 (US); BENDLAK, Thomas Edward, Macedonia, OH 44056 (US); SPYCHOLA, Mike, Solon, OH 44139 (US); WILCOX, Zachary, Solon, OH 44139 (US); BOLING, Dale, Avon, OH 44011 (US); HOLDER, Gregory Dean, Chagrin Falls, OH 44023 (US); BOTTI, Melissa, Chagrin Falls, OH 44022 (US); BARCEY, Christian, Streetsboro, OH 44241 (US)
(74) Representative: Barker Brettell LLP
(86) International application number: PCT/US2022/033626
(87) International publication number: WO 2022/266220

(56) References cited:
- WO-A1-2021/011453
- US-A- 5 145 106
- US-A1- 2011 198 391

## Description

### BACKGROUND

Exothermic welding can be used in different settings to form high quality, high ampacity, and low resistance electrical connections between different conductors. In general, an exothermic welding process can fuse together separate conductors to provide a bond with a current carrying capacity substantially equal to that of the conductors themselves. Further, exothermic welds can be relatively durable and long-lasting, and can avoid problems of loosening and corrosion that can occur for mechanical and compression joints. As a result of these benefits exothermic weld connections are widely used in grounding systems and other settings to enable connected sets of conductors to operate, effectively, as a continuous conductor with relatively low resistivity.
US 5 145 106 A discloses a welding apparatus and method where an electrically activated high temperature igniter with a pair of lead wires is adapted to be connected to a high energy source of current and a high resistance bridge between the leads. The bridge is coated with an ignition material comprising a mixture of fine aluminum, one or more metal oxides or oxygen containing compounds and a binder. The welding apparatus has a vessel filled with exothermic material. When the lead wires are supplied with a high energy electrical current, the lead wires cause the ignition material to ignite in turn causing the exothermic material to ignite. If the coated bridge wire is positioned above the exothermic material, the igniter will broadcast multiple points of ignition over the top of the exothermic material.

### SUMMARY

According to a first aspect of the invention there is provided a method of forming an ignition system for an exothermic welding system as defined by claim 1. According to a second aspect of the invention there is provided an exothermic welding system as defined by claim 9. Optional features are defined by the dependent claims.

In some aspects, the present disclosure provides a self-contained exothermic welding apparatus including a welding cup defining an internal area. A main charge of welding material can be position within the internal area. An ignition system can include a rim and an igniter assembly. The rim can be secured to the welding cup, and can support one or more cross-members. The igniter assembly can be supported by the one or more cross-members. The igniter assembly can include a mold with an interior volume, and an agglomerated ignition charge within the interior volume. At least two electrical contacts can be arranged to apply a voltage difference across the ignition charge. The at least two electrical contacts can extend outside of the interior volume of the mold.

In some examples, at least two electrical contacts can extend through a lid that covers an ignition assembly.

In some examples, one or more cross-members can support a central hub that defines a central aperture. An igniter assembly can be received and supported in the central aperture.

In some examples, an ignition charge for an exothermic welding apparatus can comprise welding material bound by pyrolyzed sugar to be in electrical communication with at least two electrical contacts.

In some examples a mold of a self-contained welding apparatus can be a ceramic mold. The mold can be configured for heating to pyrolyze a pyrolyzed sugar.

In some examples, a surface of a mold in contact with an ignition charge can include a plurality of teeth.

In some examples, an ignition charge of a self-contained welding apparatus does not comprise ignition material.

In some aspects, the present disclosure provides a method of forming an ignition system for an exothermic welding container. A binder solution can be provided comprising sugar and water. The binder solution can be combined with a welding material to form an agglomeration mixture. The agglomeration mixture can be formed onto a filament, to surround at least a portion of the filament. The agglomerated mixture and the filament can be heated to pyrolyze the sugar of the agglomeration mixture, so that the pyrolyzed sugar binds the welding material to the filament as an agglomerated ignition charge.

In some examples, heating an agglomerated mixture can include baking the agglomerated mixture within a mold.

In some examples, a mold can include at least two apertures. At least one electrical contact for a filament can extend through a corresponding one of each of the at least two apertures.

In some examples, a mold can be integrated into an exothermic welding apparatus that includes an amount of welding material arranged to be ignited by an ignition charge.

In some examples, an exothermic welding apparatus can comprise a cup defining an internal area that contains an amount of welding material. A mold can be secured at or in the internal area of the cup to dispose an ignition charge to ignite the amount of welding material.

In some examples, a method of forming an ignition system for an exothermic welding container can include forming a self-contained welding charge by securing a filament and an ignition charge to a cap structure of a container that contains an amount of welding material. The self-contained welding charge can include an ignition charge and exposed contacts for the filament.

In some examples, a cap structure for an ignition system for an exothermic welding container can include a rim structure that can be secured to one or more side walls of the container. The cap structure can further include one or more cross-members that support an ignition charge for ignition of an amount of welding material.

In some examples, a cap structure for an ignition system for an exothermic welding container can includes a central aperture. The central aperture can receive a mold to support an ignition charge relative to one or more cross-members and a rim structure.

In some examples, a mold can include a mold portion with a mold cavity and a peripheral flange. A sugar can be pyrolyzed in the mold cavity by a heating. The mold can be secured to a cap structure, at a central aperture of the cap structure, with the peripheral flange.

In some aspects, the present disclosure provides a method of assembling an exothermic welding apparatus. A binder and a weld material can be combined to form an agglomeration mixture. The agglomeration mixture can be formed about a filament or other conductor within a mold, and can at least partially surround the filament or other conductor. The agglomeration mixture can be heated within the mold to form an agglomerated ignition charge on the filament or other conductor. The mold containing the ignition charge can be secured to a cap structure. The cap structure can be secured to a cup defining an internal area containing a main charge of weld material that is arranged to be ignited by molten metal from the ignition charge.

In some examples, a binder solution can be provided, and can include water and sugar. An agglomeration mixture containing the binder solution can be heated, to pyrolyze the sugar to bind an ignition charge to a filament or other conductor.

In some examples, an agglomeration mixture does not comprise an ignition material.

In some examples, a mold for an exothermic welding apparatus is a ceramic mold, and can include internal teeth to engage a pyrolyzed sugar.

### BRIEF DESCRIPTION OF THE DRAWINGS

The accompanying drawings, which are incorporated in and form a part of this specification, illustrate examples of the disclosed technology and, together with the description, serve to explain the technical principles of the disclosure:
FIG. 1 is a cross-sectional isometric view of a conventional welding system;
FIG. 2 is an isometric view of an example exothermic welding system including an exothermic welding container and a mold, with certain components of the mold being rendered transparently;
FIG. 3 is an isometric view of the exothermic welding container of the exothermic welding system of FIG. 2, with a cover of the exothermic welding container in a closed position.
FIG. 4 is an isometric view of the exothermic welding container of FIG. 3, with the cover in an open position.
FIG. 5 is an isometric, cross-sectional view of the exothermic welding container of FIG. 4.
FIG. 6 is a flowchart for a method for forming and using an igniter assembly in accordance with certain aspects of the present disclosure.
FIG. 7 is an isometric view of another example for an exothermic welding system in accordance with certain aspects of the present disclosure.
FIG. 8 is an isometric view of another example of an exothermic welding container, according to certain aspects of the present disclosure.
FIG. 9 is an isometric view of a mold for use with the exothermic welding container shown in FIG. 8.
FIG. 10 is a top plan view of the mold of FIG. 9.
FIG. 11 is a cross-sectional side elevation view of the mold of FIG. 9, as indicated by line 11-11 in FIG. 10.
FIG. 12 is an exploded isometric view of an igniter assembly for the exothermic welding container of FIG. 9.
FIG 13 is a cross-sectional front elevation view of the igniter assembly of FIG. 12.
FIG. 14 is an exploded isometric view of a lid and an igniter assembly for the exothermic welding container of FIG. 9.
FIG. 15 is a cross-sectional front elevation view of the exothermic welding container of FIG. 9.
FIG. 16 is a flowchart for a method for forming and using an igniter assembly in accordance with certain examples of the present disclosure.

### DETAILED DESCRIPTION

Before any examples are explained in detail, it is to be understood that the disclosure is not limited in its application to the details of construction and the arrangement of components set forth in the following description or illustrated in the following drawings. The disclosed technology is capable of other implementations and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "either," "only one of," or "exactly one of." For example, a list of "one of A, B, or C" indicates options of: A, but not B and C; B, but not A and C; and C, but not A and B. A list preceded by "one or more" (and variations thereon, e.g., "at least one of") and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more of A, one or more of B, and one or more of C. Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

The following discussion is presented to enable a person skilled in the art to make and use embodiments of the invention. Various modifications to the illustrated examples will be readily apparent to those skilled in the art, and the generic principles herein can be applied to other examples and applications without departing from current disclosure. Thus, the disclosure is not intended to be limited to examples shown, but is to be accorded the widest scope consistent with the principles and features disclosed herein. The following detailed description is to be read with reference to the figures, in which like elements in different figures have like reference numerals. The figures, which are not necessarily to scale, depict selected examples and are not intended to limit the scope of the disclosure. Skilled artisans will recognize the examples provided herein have many useful alternatives and fall within the scope of the disclosure.

As noted above, exothermic welding can be used to connect together metal structures, such as copper conductors of an electrical system. Generally, exothermic mixtures can include a combination of a reductant metal and a transition metal oxide, which upon ignition react exothermically to supply sufficient heat to propagate and sustain a continuing reaction of the mixture. The resulting heat can be used directly or the resulting molten metal can be used to create a useful weld, as in the case of exothermic welding.

As one example, some conventional exothermic weld material mixtures can include aluminum and copper oxide. Upon ignition, the resulting exothermic reaction can provide a mixture of molten copper and aluminum oxide (the latter being commonly referred to as "slag"). The molten copper has a higher density than the slag and can accordingly be caused by gravity to flow within a mold to weld together metal conductors (e.g., copper to copper or steel to steel). The less dense aluminum oxide slag is generally removed from the weld connection, or from other parts of the mold in which it may accumulate, and discarded. As another example, other conventional mixtures can include iron oxide and aluminum, which can react with similar effect.

Exothermic mixtures of this type do not react spontaneously and need a method of initiating the reaction, which involves generating enough localized energy to enable the exothermic reaction to begin. One typical method of initiating ignition is through use of starting powder and an ignition source such as an electric igniter or a flint igniter. However, because of the starting powder's low ignition temperature and deficiencies in handling and shipping, much effort has been made to find a reliable and low cost alternative ignition system for the exothermic material. A number of electrical systems have been devised which range from simple spark gaps to bridge wires or foils, to much more esoteric devices such as rocket ignitors. Such efforts are seen, for example, in prior U.S. Patent nos. 4,881,677, 4,879,952, 4,885,452, 4,889,324, 5,145,106, 7,950,568, 8,581,149. For a variety of reasons, including because of power requirements, dependability, and cost, such devices have not succeeded in replacing the standard starting powder/flint gun form of initiating the self-propagating exothermic reactions. Another electrical ignition system is the system disclosed in European Patent Publication No. 875,330.

When an exothermic reaction occurs, high temperatures are reached in a very short period of time thus causing the surrounding air to expand and flow upwardly out of the vessel or crucible where the reaction takes place. Along with this sudden upward rush of hot gases there is, in addition to flame and spatter, a considerable amount of particulate matter in the form of dust or smoke. Simply to plug the exhaust exits would cause pressure build-up in the vessel or crucible which would then force unreacted exothermic material or slag into the weld chamber or force molten weld metal out of the part receiving holes, or in a multi-part mold, cause separation of the parts, all of which is unacceptable.

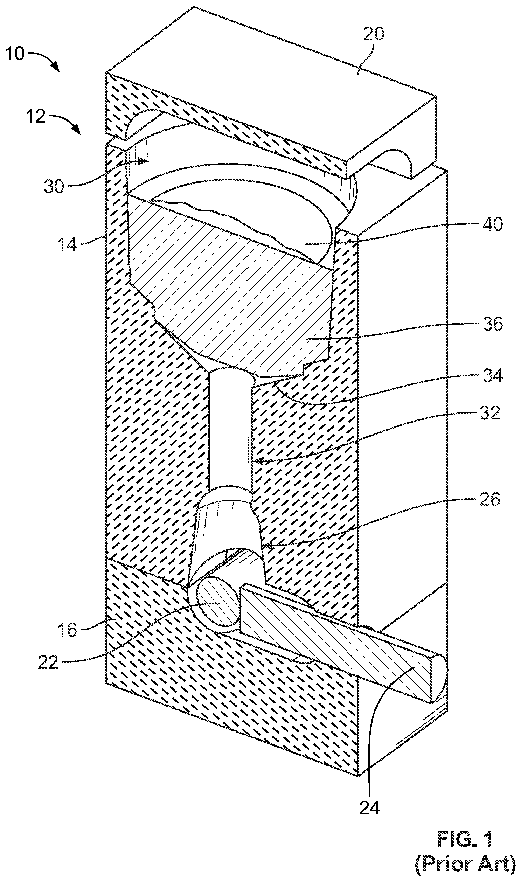

In conventional systems, in order to appropriately contain the large amount of heat produced by exothermic reactions, highly engineered and relatively expensive graphite molds can be used. In a conventional arrangement illustrated in FIG. 1, for example, a conventional welding apparatus 10 uses a split graphite mold 12. In the example illustrated, the mold 12 includes an upper mold body section 14, a lower mold body section 16, and a mold cover 20 formed as a hinged or other lid. The body sections 14, 16 of the mold 12 align to define a weld chamber 26, as well as channels leading thereto. Conductors to be joined, such as copper bars 22, 24, are appropriately cleaned and then placed in alignment with the channels to project into the weld chamber 26. To hold and react exothermic material, the upper mold body section 14 includes a crucible chamber 30 disposed generally above the weld chamber 26, and connected to the weld chamber 26 by a tap hole 32. With the mold body sections 14, 16 securely closed, a metal disk 34 can be positioned in the crucible chamber 30 over the tap hole 32. An appropriate amount of exothermic material 36 can be placed into the crucible chamber 30 on top of the disk 34, and a starting powder or material 40 may be sprinkled over the top of the exothermic welding material 36 prior to ignition. The mold cover 20 is then closed and the exothermic reaction initiated by igniting the starting powder 40 by the use of an electrical igniter or flint ignitor (not shown).

The welding apparatus 10 and other similar devices can provide strong, durable, and highly conductive welds. However, certain aspects of conventional approaches can result in relatively large system costs, as well as potential for user error. For example, although graphite can provide a durable, reusable, and appropriate heat-resistant mold for welding, it is also highly engineered and processed material with large lead times for manufacturing and relatively high cost. Graphite molds also typically require substantial, time-consuming preheating to ensure appropriate flow of molten weld material from a crucible chamber through a tap hole to a weld chamber, as well as substantial clean-up between welding operations, including to remove slag or other deposits. Even with periodic cleaning, the formation of the residues may reduce the operational life of the mold 12, and the cleaning itself may cause damage to the mold, also leading to a reduced operation life.

In addition, there are other difficulties inherent with the welding apparatus and method described above. Aside from the difficulties in handling and shipping the starting powder 40, there may be problems in handling and shipping the bulk exothermic material 36 itself. Many conventional graphite molds are inherently open systems, allowing users to add or remove weld material at will, with corresponding potential for user error relative to the amount and location of weld material and starting powder, and allowing the possibility that containments could be introduced to the weld material prior to ignition. Conventional arrangements typically also do not include extensive systems for easily and reliably igniting the weld material, for preventing users from igniting weld material prematurely, or for mitigating the expulsion of flames, fumes, and fine particulate matter from the welding system during use.

Accordingly, it will be appreciated that improved welding apparatus and methods would be desirable.

The technology of the present disclosure can variously address one or more of the issues listed above, or others, to provide an improved exothermic welding system. For example, in one aspect, the present disclosure provides an exothermic welding system having integrated filtration for preventing the expulsion of flames and fine particulate matter from the welding system during the welding process. In another aspect, the present disclosure provides example manufacturing methods for an improved electrical ignition system including an igniter that can initiate an exothermic reaction to ignite exothermic welding materials (e.g., as an ignitable agglomeration that does not require the use of starting material).

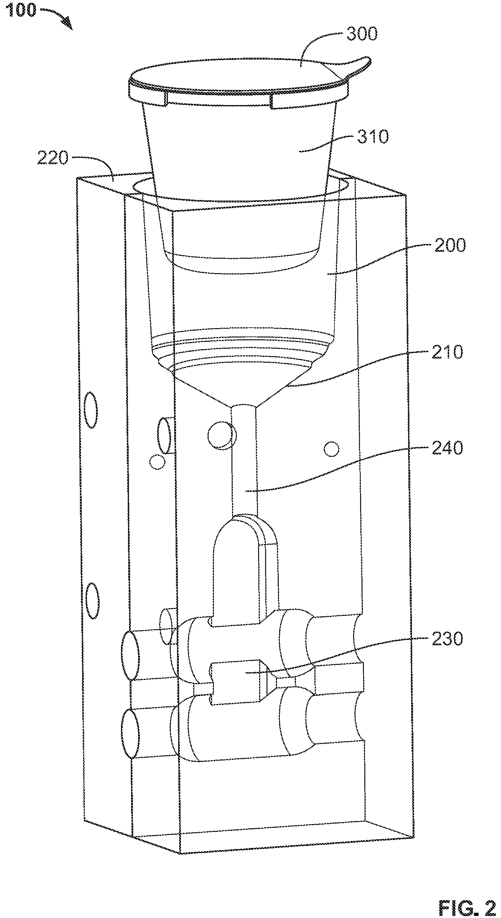

In one aspect, the present disclosure may provide a self-contained, single-use container, including as shown via containers 300, 470, or 500 (shown in FIGS. 2, 7, and 8, respectively) for an exothermic welding system (e.g., the systems 100 or 450). Generally, the container includes a cup defining an internal area that contains a main charge of exothermic weld material, which can be reacted to provide molten metal for welding connections during the exothermic welding process. The container may be suitable for use in a wide variety of applications or with a variety of welding systems (e.g., molds, etc.). The cup holds the main charge of weld material during transport and the reaction of the welding process, and the cup may be discarded after a single use. In some examples, the cup may be made from stainless steel and include a graphite foil liner around the inner diameter to prevent melting of the sides of the container during use. In other examples, the container may not include the foil liner. For example, the cup may be formed from a material other than stainless steel, such as, for example, a different metal-alloy, a pure metal, a ceramic, or a combination of materials.

In another aspect, the present disclosure provides a single-use container, as can including an integrated (e.g., non-removably attached) filter that blocks off an open upper end of the cup to prevent particulate materials and flames from being expelled from the container during the exothermic welding process. The filter may be preinstalled onto the container prior to shipment, such that the container is provided with a pre-measured quantity of exothermic weld material, and this can mitigate the potential for user error in measuring weld materials, as is required with conventional welding systems. In some examples, the filter may comprise any non-melting or appropriate high-melting point filter media, and, in preferred examples, the filter may comprise a fibrous, non-melting felt-based material. For example, a preferred filter may be formed from a non-melting felt, such as carbon-based felt, graphitized felt, or a ceramic fiber felt. In other examples, other filter materials may be used. In preferred examples, the filter allows for the passage of gasses (*e.g*. air) into and out of the container to prevent pressurization of the container during the exothermic welding process.

Generally, a filter (or other component of a lid assembly) can be secured to the mouth of a container by any mechanical fixation means, such as by crimping, clamping, or other known methods. In some examples, the container further includes a lid support structure, including as can have a rim that crimped at the opening of the cup (e.g., at a top lip thereof) after the filter is placed over the opening, thereby securing the filter to the container. In other examples, other methods may be used to secure the filter to the container, including, for example, non-mechanical fixation.

In yet another aspect, the container can further include an integrated electric igniter (*e.g.,* as attached to and partially enclosed by a container of a self-contained welding apparatus). The igniter generally comprises an ignition charge and a conductive filament (*e.g.,* wire or strip). Preferably, the filament may be formed from tungsten material, but may instead be formed from other conductive material(s) in some examples. Generally, the ignition charge is disposed within the internal area of the cup between the filter and the weld material for initiating an exothermic reaction of the weld material, and free ends of the filament (or other relevant electrical contacts) extend outside of the cup. In some examples, the free ends of the filament may protrude through the filter or other components. In some examples, the igniter may be connected to a different portion of the container, generally so as to ensure that sparks or molten material from the ignition charge can appropriately contact and ignite a main welding charge. During use, ignition can thus generally be initiated by flowing electrical current through the filament, via connections at the free ends thereof, causing the filament to heat due to its own electrical resistance and thereby ignite a reaction of the agglomerated welding material.

In some examples, an igniter may be secured within the cup such that the agglomerated weld material of the igniter is suspended below (e.g., from) a filter or other lid structure and the ignition charge is suspended above the main charge. (As used herein, unless otherwise defined of limited, "above, "below," and the like are made with reference to the direction of gravity for gravity-driven welding systems.) Upon ignition, and due to the influence of gravity, the ignition charge can thus shower the main charge of the weld material with sparks, as well as molten portions of the previously-agglomerated weld material, which can thereby ignite the main charge to initiate the exothermic welding reaction.

Beneficially, some igniters in such configurations are suitable for use with cups containing various quantities of welding material. That is to say, an example container could be filled with any quantity of welding material without having to use a different igniter and without having to adjust the height of the igniter in order to achieve successful ignition, as can be required by conventional electric igniter systems. In some examples, ignited weld material from the agglomerated ignition charge will fall upon and ignite the main charge under the influence of gravity, and the igniters can therefore be effective regardless of the level to which the container has been filled with weld material. Thus, igniter systems of the present disclosure are less likely to misfire during use in comparison to conventional electric igniter systems of the prior art.

In some embodiments, igniters according to the present disclosure can provide a number of advantages for manufacturers of welding products in addition to users. For example, such igniters eliminate the need for manufacturers to separately produce and ship starting material in addition to welding material, Further, the nuisance for a user to measure a suitable quantity of starting material for igniting a given quantity of weld material, as is conventionally required, is likewise avoided.

In various embodiments, the container may be configured for use with a standard mold, such as, for example, a graphite mold, that may include a crucible, a weld chamber, and a tap hole fluidly connecting the crucible to the weld chamber to allow molten weld material to flow from the crucible to the weld chamber during the exothermic welding process (*e.g*., as discussed with respect to FIG. 1). The example container can be configured to be transported separately from, and then received within the crucible of the mold, the container being configured to hold the welding material throughout the welding process such that, following ignition, the weld material may flow from the cup, through the tap hole, and to the mold chamber. During use, the exothermic welding reaction occurs inside the internal area of the cup, and the filter prevents flames and other matter from being expelled from the cup, while still permitting the venting of hot gases that result from the exothermic reaction(s).

In other examples, a container may effectively replace certain structures on a conventional welding mold, such as the crucible chamber 30. Thus, rather than a graphite mold that includes a weld chamber, crucible chamber, lid, tap hole, and so on, the welding system can include a separate container that is formed from non-graphitic material, such as ceramic, steel, or other suitable, low-cost material. In such cases, the example container or cup may functionally provide a removable crucible for use with the separate mold, which can be a self-contained unit that is prefilled with an appropriate main weld charge. The example container can be configured to be transported separately from, but then secured in alignment with, the separate mold (e.g., a graphite mold) that contains a weld chamber for conductors that are to be welded together. As with many of the aforementioned embodiments, the container can comprise a cup for holding the welding material during the welding process, wherein a filter effectively blocks the mouth of the cup, and an electrical igniter comprising agglomerated weld material is provided within the cup to initiate an exothermic reaction of the weld material. With the container appropriately aligned with a separate mold, weld material within the container can be ignited and directed to flow from the container to the weld chamber of the mold. The container (or crucible) can then be removed from the separate mold for disposal, as appropriate, whereas the separate mold can be reused as needed.

As an example implementation of some of the principles discussed generally above, FIG. 2 illustrates an exothermic welding system 100 according to one example of the disclosure. As variously discussed below, the welding system 100 includes a self-contained, disposable container 300 provided for use with a welding mold 200 (or other welding molds of various known configurations). The container 300 comprises a cup 310 containing exothermic welding material. In the illustrated embodiment, the mold 200 comprises a two-part, split body having a crucible 210 formed integrally with an open top end 220 of the mold. In particular, in the illustrated example, the mold 200 does not include a lid for the crucible 210. Correspondingly, after the crucible 210 receives the container 300 during assembly, the top end 220 of the mold 200 remains open during use (*e.g*., during welding operations). The mold 200 further includes a weld chamber 230, and a tap hole 240 provides fluid communication between the weld chamber 230 and the crucible 210.

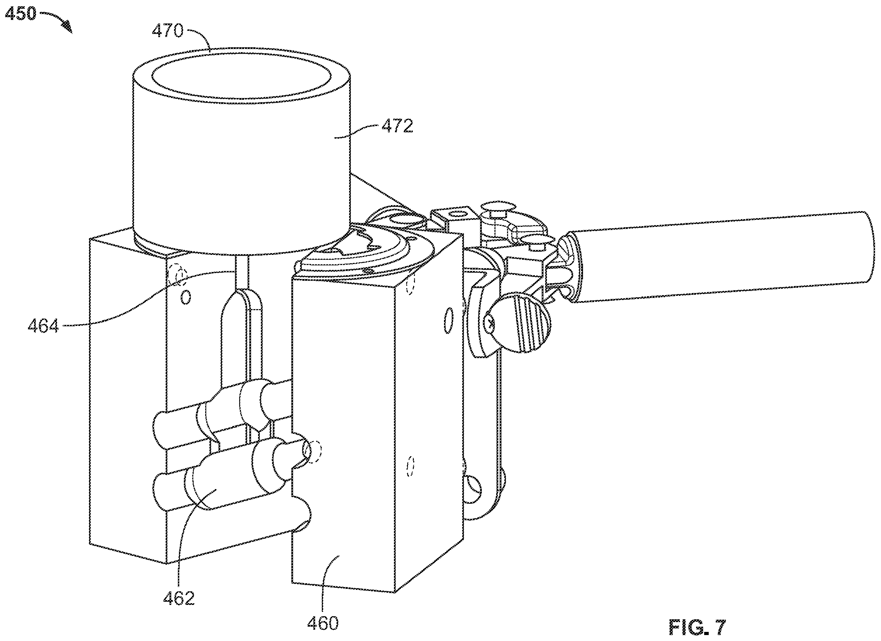

In various embodiments, the exothermic welding system 100 (or 450) may include more or few components than those shown in FIG. 2 (or FIG. 7). For example, in certain embodiments, the mold 200 may include a crucible 210 that is separable from mold 200, wherein the crucible 210 comprises its own distinct component. Further, as generally noted above, the container 300 and other containers according to this disclosure can be used with a variety of other weld molds, including as shown in FIG. 1.

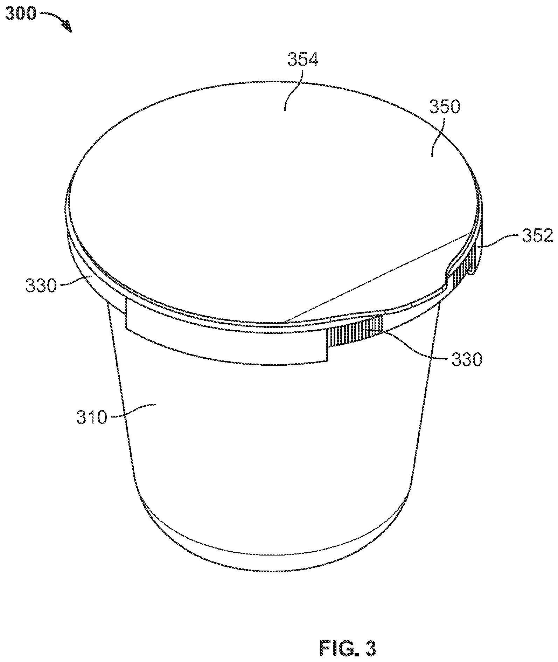

With reference to FIGS. 3-5, various views of the container 300 are shown in differing states of assembly for the purpose of emphasizing certain example structures and functions in accordance with some aspects of the present disclosure. However, it should be understood that discussion of structure and functions with specific reference to the container 300 of FIGS. 2-5 generally also applies to the container 470 of FIG. 7, as well as to other example containers not explicitly shown and described herein. Further, the below description of the illustrated examples should not be interpreted as limiting to scope of the disclosure to that which is explicitly shown and described. Instead, the present disclosure provides examples of potential configurations for welding systems or containers having certain features in accordance with the present disclosure, and alternate examples could potentially include fewer components, more components, or variations with respect to the example structures or functions described herein.

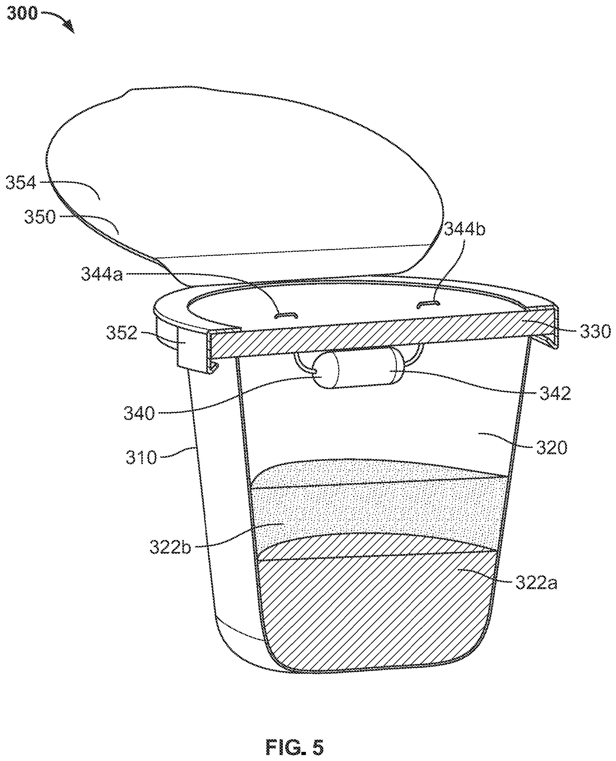

Still referencing FIG. 3-5, the example container 300 comprises a cup 310. The cup 310 includes a bottom surface, and an annular sidewall that extends upwardly and outwardly from the bottom surface and terminates at a lip extending away from an adjacent side wall proximate a main opening defined at the upper end of the cup 310. As such, the main opening is surrounded by the lip. The container 300 also includes a filter 330 that blocks the main opening upper end, wherein lip supports the filter 330 relative to the cup 310. An interior area 320 in communication with the main opening is at least partially defined by the bottom surface and the annular sidewalls below the upper end, and a main charge 322a or 322b (see FIG. 5; referred to generally as main charge 322) of exothermic welding material is contained within the internal area 320. The main charge 322 of weld material may comprise conventional powdered or solid weld material and generally does not include any ignition material (or "starting material;" *e.g.,* may not be a Class 4 Flammable Solid). In some examples, the weld material of the main charge 322 can be provided within the internal area 320 prior to installation on the filter 330. For example, the weld material of the main charge 322 may be introduced into the internal area 320 during manufacturing, and the internal area 320 is then sealed by the filter 330 (or other components) against egress of the weld material of the main charge 322 or addition of excess weld material. (As used herein in this context, "sealed" indicates the closure of a compartment to prevent egress or introduction of a particular form of weld material and does not necessarily, for example, indicate an air-tight closure.) Thus, for example, the disposable container 300 may be prepared to provide an optimal weld, without the need for users to measure out or otherwise adjust weld material (or main charge) 322 therein.

Continuing, the filter 330 is preferably formed from a heat-resistant or non-melting material which allows gasses (notably, air) into and out of the container 300 so as to avoid pressurizing the container 300 following ignition of the exothermic welding material of the main charge 322. Further, the relatively durable configuration of the cup 310 may generally protect the weld material of the main charge 322 and other components of the container 300 (e.g., the filter or an igniter 340, as further discussed below) during transport.

With particular reference to FIG. 5, in some examples, containers according to the present disclosure may be filled with different amounts of weld material for the main charge 322 during the manufacturing process. For example, the container 300 may include a first quantity of weld material of the main charge 322a or a second quantity amount of weld material of the main charge 322b, wherein the second quantity of weld materials 322b may be greater than the first amount of weld materials 322a, and thereby extends to a greater height within the interior area 320 and relatively closer to the igniter 340 than the first quantity of weld material of the main charge 322a, as also described below.

Generally, a body of the container 300 according to some examples can be configured to durably contain weld material of the main charge 322 or components of the igniter 340 during transport and set-up for a welding operation. Similarly, the cup 310 of container 300 can also generally be configured to withstand the heat and rapid temperature changes associated with exothermic reaction of the weld material of the main charge 322 and routing of the resulting molten metal to an associated mold 200. In some examples, the cup 310 can be formed from ceramic or other non-graphitic material. In some cases, cordierite ceramic or other magnesium aluminum silicate material may provide a particularly beneficial configuration. However, other examples may use any type of suitable material. For example, the container 300 (or cup 310) of the illustrated examples may be formed from steel or another types of metal, and the container 300 may include any number of additional components formed from suitable materials, such as, for example, a graphite liner (not shown), which may be used to line the sidewalls walls on the interior area 320 to increase durability of the cup 310 and prevent melting of the cup 310 during use. Of note in this regard, because molten weld material may not be required to reside in a container for a substantial amount of time, particularly specialized materials (e.g., engineered graphite) may not necessarily be needed for container construction. Further, and relatedly, material for construction of disposable containers 300 may not need to be nearly as durable as conventional molds (*e.g.* mold 200 or 460), which may be required to maintain structural integrity through dozens of extreme temperature cycles.

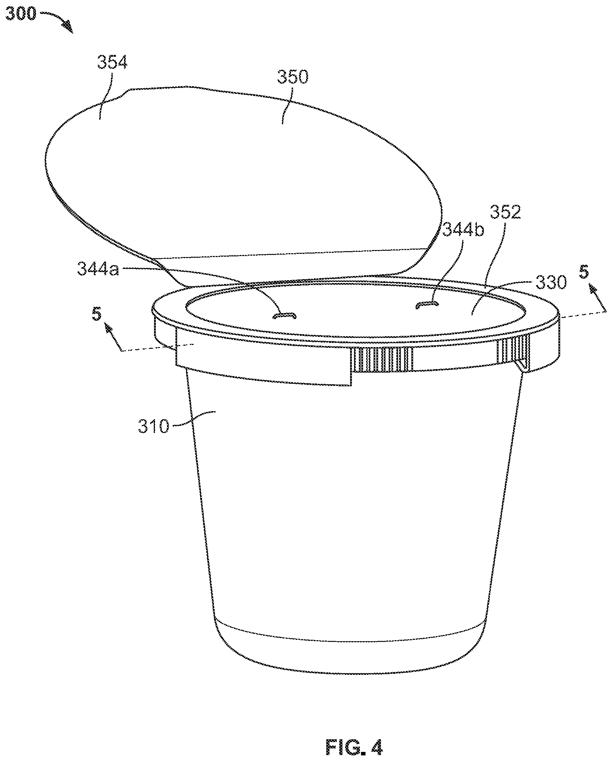

In some examples, the container 300 may further include a removable cover 354 for closing the main opening of the cup 310, as can protect the filter 330 from damage during transport, help retain welding material within the cup 310, and generally prevent containments, such as liquids or particulates, from being introduced into the internal area 320 through the filter 330. With reference to FIGS. 4 and 5, the disposable container 300 includes a lid 350 having a movable cover 354, which is configured to close the main opening of the cup 310, as is shown in FIG. 3. The cover 354 is disposed opposite the filter 330 from the main charge 322 of exothermic welding material.

In the illustrated example, the lid 350 also secures the filter 330 to the cup 310. In particular, the filter 330 is supported by the lip which surrounds the main opening of the cup 310, and a rim 352 of the lid 350 is placed atop the filter 330 and then crimped to the lip to secure the filter 330 to the cup 310 (*see, e.g.* FIGS. 4 and 5). As noted above in earlier portions of this disclosure, other example containers in accordance with the present disclosure may include different means for securing a filter to a container other than crimping via a lid. For example, a wide variety of fastening means could reasonably be utilized instead of the lid to secure the filter.

Some examples can include an integrated ignition system, including as shipped. For example, as illustrated in FIGS. 4 and 5 in particular, the disposable container 300 includes an igniter 340 that is in communication with the internal compartment 320 as well as the exterior of the cup 310, so as to be able to ignite the weld material of the main charge 322 based on an external signal. In this regard, as also alluded to above, the disposable container 300 can be viewed as self-contained because it includes, as part of an integrated unit: an internal chamber or other internal area (i.e., the area 320) formed in a container (i.e., cup 310) that can independently contain or direct molten weld material; an igniter (i.e., the igniter 340); and the weld material of the main charge itself (i.e., the main charge 322). Further, as noted above, the example container 300 includes filter 330 attached to the opening of the cup 310, and the filter is provided so that, following ignition of the main charge 322, flames, molten weld material, and/or fine particulate matter are prevented from being expelled from the opening of the cup 310.

In different examples, different types of igniters can be used. In the illustrated example, the igniter 340 is an electrical igniter, which includes a conductive filament 344 (e.g., a wire of tungsten material) with first and second free ends 344a, 344b and extends through a mass of agglomerated weld material comprising an ignition charge 342 within the internal area 320 (see FIG. 5). Thus, through the application of an appropriate electrical signal via the ends 344a, 344b the charge 342 can be ignited and the resulting molten weld material can fall onto the main charge 322 to trigger an exothermic reaction of that weld material, for welding of components together. In other examples, however, other configurations are possible, including other configurations of an ignition charge and an ignition element configured to ignite the charge, or other igniters of a variety of types. For example, some resistors may be adhered to but not pass through an ignition charge, or may pass through a powdered ignition charge rather than an agglomerated mass of weld material.

In some examples, an ignition system can be configured to be readily activated only when a disposable container is appropriately aligned with an associated mold or within an associated crucible. For example, electrical leads of an electrical ignition system can be arranged so as to be accessible for activation, or so as to establish electrical communication with an ignition controller, only when the associated container 300 is appropriately installed. In this regard, for example, with reference to FIGS. 3 and 4, the removable cover 354 is removably secured to the lid 350, and the first and second ends 344a, 344b of the conductive filament 344 are disposed between the removable cover 354 and the filter 330. As such, the first and second ends 344a and 344b of the conductive filament 344 may only be accessible after a user manually opens the movable cover, as shown in FIG. 5. Further, in some configurations, the particular spacing and opposed orientation of the first and second ends 344a, 344b can help to prevent accidental ignition in a wide range of contexts. Similarly, because the filament 344 passes only through the filter 330, and not through the body of the cup 310, potential egress of pressurized gases from the cup 310 at the intersection points with the filament 344 can be avoided. In some examples, other benefits can also accrue for an arrangement in which ends of a conductive filament for an igniter of a container are placed in communication with an ignition controller only when the container is correctly aligned for a welding operation.

In some examples, it may be useful for a disposable container 300 to include structural features that can ensure appropriate alignment of the disposable container 300 with an associated mold 200. In some cases, complementary structural formations (e.g., complementary protrusions and recesses) can be used. For example, as also shown in FIG. 2, the cup 310 is configured to fit closely within a central depression of the crucible formed in graphite mold 200, with a perimeter lip of the depression extending to overlap with side walls of the cup 310. Thus, lips or other structures can individually and collectively ensure that the tap hole 134 of the disposable container 300 is appropriately aligned with an entrance passage (of the tap hole) into a weld chamber 230 of the graphite mold 200.

In some examples, a lid (not shown) may further comprise a tortured path structure disposed between the removable cover and the filter. A tortured path structure may, for example, comprise a series of baffles that are integrally formed with the lid, wherein the baffles have an overlapping or winding structure which reduces the velocity of escaping gasses that are expelled from the cap through the filter and out of the central vent opening of the lid following ignition of the exothermic welding reaction.

With reference to FIG. 7, an example exothermic welding system 450 in accordance with the present disclosure is shown, including a self-contained, single use container 470 that comprises a ceramic cup 472 , wherein the ceramic cup 472 effectively replaces the crucible 210 of mold 200 shown in FIG. 2. In particular, the cup 472 is configured to provide a removable crucible of the mold 460. The example configuration of the mold 460, as shown in FIG. 7, comprises a split body including an open top end, a weld chamber 462, and a tap hole 464 fluidly connecting the weld chamber 462 with the open top end (not shown). With continued reference to FIG. 7, the container 470 is illustrated as being securable to the mold 460 via a clamp and bracket system, which aligns the container 470 with the open top end (not shown) of the mold 460. However, other examples may include different means for attaching or suitably aligning a container upon a mold during use.

Although the arrangement illustrated in FIG. 1 and 7 may offer particular benefits, other configurations for an exothermic welding system are possible. For example, some examples can use other arrangements of complementary features to align or secure a disposable container, including separate support ring lips formed on a crucible rather than on a mold, protrusions on a mold and complementary recesses on a container, and so on. Some examples can use movable features such as latches or clasps.

In some implementations, devices or systems disclosed herein can be utilized or installed using methods embodying aspects of the disclosed technology. Correspondingly, description herein of particular features, capabilities, or intended purposes of a device or system is generally intended to inherently include disclosure of a method of using such features for the intended purposes, a method of implementing such capabilities, and a method of installing disclosed (or otherwise known) components to support these purposes or capabilities. Similarly, unless otherwise indicated or limited, discussion herein of any method of manufacturing or using a particular device or system, including installing the device or system, is intended to inherently include disclosure, as examples of the disclosed technology, of the utilized features and implemented capabilities of such device or system.

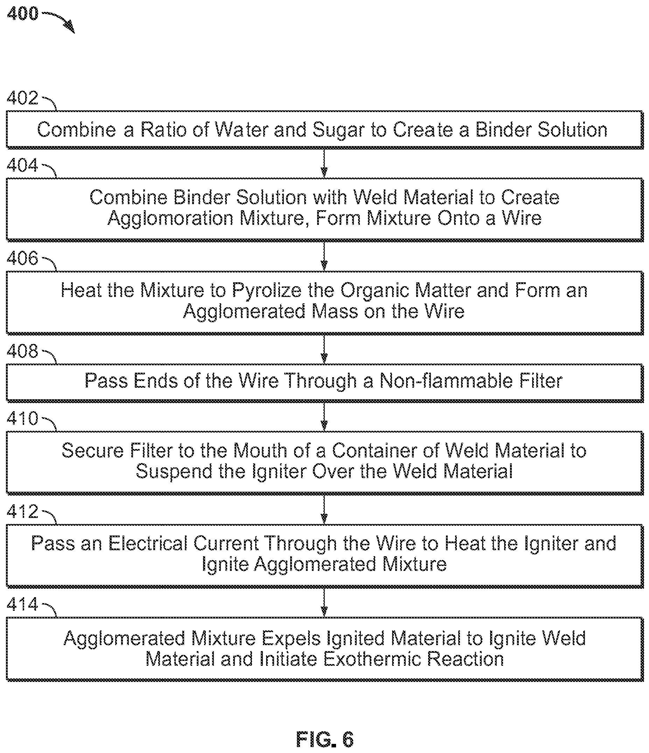

With reference to FIG. 6, for example, a flowchart is provided showing a method 400 that may be used in some examples for forming and using an ignitor for exothermic welding. The method generally comprises, at operation 402, combining a ratio of water and sugar (e.g., sucrose) to create a binder solution. For example, examples in accordance with the present disclosure can include a sugar solution that is formed with a mass ratio of between 2:1 and 1:1 of water and sugar, although other ratios may be appropriate in some cases.

At operation 404, the binder solution can be combined with weld material to create an agglomeration mixture of binder and weld material for an ignition charge (e.g., ignition charge 342). The agglomeration mixture can then be formed onto a wire (e.g., a filament) or other carrier (e.g., a stamped, machined, or otherwise formed metallic element), so as to be in an appropriate shape and relative location to ignite a larger welding charge when sufficiently energized. In some examples, an agglomeration mixture can be compressed onto (e.g., fully around) a filament. In some examples, a mold can be used to shape the agglomeration mixture around a filament, including as further discussed below. In some examples, the sugar solution is mixed with the exothermic welding material with a mass ratio of between 0.10 and 0.30 of sugar solution to welding material, although other ratios may be appropriate in some cases.

In some examples, the mixture can be heated to be formed into an agglomerated ignition charge (e.g., the charge 342 of FIG. 5), including so as to secure the ignition charge to a conductive filament (e.g., the filament 344 of FIG. 5). For example, at operation 406 the ignition charge is heated to solidify the mixture into a solid agglomerated mass, and bind the ignition charge to surround part of a length of the conductive filament. In particular, heating an agglomeration mixture of weld material (i.e. the ignition charge) and binder solution to a sufficient temperature can cause a pyrolyzation of the sugar, leaving behind an agglomerated formation of relatively dense carbon residue that can securely bind the ignition charge to the filament (or to another relevant ignition structure).

In various examples, different concentrations or ratio of the materials may be used to optimize the binding strength of the sugar binder and effectiveness of the eventual ignition relative to a particular application or context. To set the binder solution via pyrolyzation of sugar, for example, the ignition charge can be heated to at least 176.7 °C for between 3-9 hours (inclusive). In other examples, the binding solution may be heated to higher temperatures (e.g., 180°C, 190 °C, 200 °C, or higher) for shorter periods of time, or the solution may be heated for longer or short ranges of times (e.g., for two hours or less, or 10 hours or more) to optimize different structural characteristics of the bond between the ignition charge and the filament or other aspects of the igniter.

Once an igniter is formed (e.g., as discussed above), at operation 408, ends of the wire protruding from the igniter can be passed through a non-flammable filter, or contacts for the wire can otherwise be arranged for applying a voltage difference across the igniter. At operation 410, the filter (if included) can be secured to the mouth of a container with a charge of weld material to suspend the igniter above the charge of weld material. Thus, a container can be prepared as an integrated welding apparatus for an ignition process for welding, including as detailed above and below.

For example, once formed, an integrated container can be used to weld conductors or other objects together, as needed. For example, once the container is appropriately installed (e.g., in a mold as shown in FIG. 2, an electrical current can be passed through the wire, at operation 412, to heat the igniter and thereby ignite the weld material of the agglomerated ignition charge. At operation 414, the ignited weld material can thus be expelled from the igniter (e.g., under the force of gravity) and fall onto a main charge of weld material within the integrated container, thereby initiating an exothermic reaction of the main welding charge.

As also noted above, in some examples, an ignition charge comprising a sugar solution and welding material can be heated or baked within a mold, and the resultant pyrolyzation of the sugar in the sugar solution can bind the ignition charge to a filament and also to the mold. This can be advantageous, in some cases, as it can provide a support structure for the ignition charge so that a consistent compressive force need not be applied to the charge in the heating process to achieve a suitable binding of the charge to the filament to provide an agglomerated ignition charge. The mold can be a ceramic mold, for example, which can allow the mold to withstand the temperatures required to heat the charge.

In some cases, a mold can be integrated into a top of an exothermic welding container to suspend an ignition charge over a main charge of welding material within the welding container, without necessarily removing the ignition charge from the mold. In some examples, the mold can be a non-conductive material, including, for example, a ceramic or a graphite. The mold can thus serve as a non-conductive barrier between conductive elements of the igniter assembly (e.g., the filament and wire leads) and the welding container when installed collectively with the ignition charge. This can help to prevent a short-circuit of the electrical components by reducing a possibility of contact between the conductive elements of the igniter, and the welding container. In some implementations, the mold itself can be produced in an injection molding process.

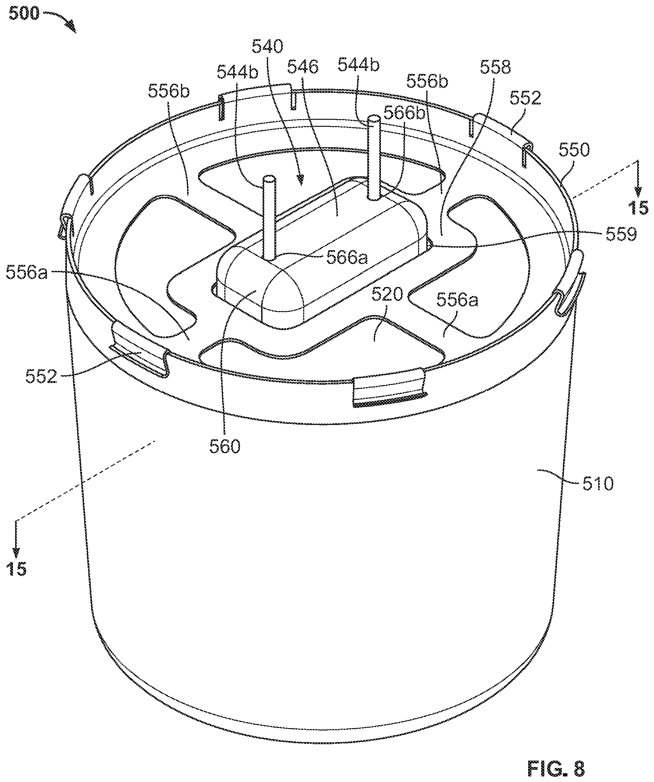

FIG. 8 illustrates an example an exothermic welding container 500, which can be similar to container 300, and include similar numbering for similar elements. As illustrated, the exothermic welding container 500 can include a cup 510 defining an interior area 520, which can contain a main charge of welding material (not shown). A cap structure 550 can be provided for a mouth of the container, including as can support or form part of a lid for the container (e.g., as discussed relative to the example of FIG. 5) and a plurality of gripping elements of the lid can engage a rim of the cup 510 to secure the cap structure 550 to the cup 510. As shown, the gripping elements can comprise bent tabs 552 (e.g., snap-on or other spring tabs) that can extend past the rim of the cup 510, and function as clamps for securing the cap structure 550 to the welding cup 510. In other examples, other mechanisms or gripping elements can be provided for securing a cap structure or a lid to a welding cup, including, for example, a threaded periphery which can be received into a threaded portion of the welding cup.

Generally, a cap structure can be arranged to engage one or more walls of a welding apparatus to secure the pyrolyzed ignition charge so as to ignite a working charge of weld material when a voltage difference is applied across the filament (e.g., to thereby generate sufficient quantity of molten metal from the working charge to weld two conductors together within a graphite mold). Thus, some cap structures can include a rim structure to secure the cap structure to a side wall of a container of welding material (e.g., with partially or fully annular/peripheral contact), and one or more cross-members that extend from the rim structure to support the ignition charge and filament so that contacts for the filament are available for users and the ignition charge is positioned to ignite the welding material in the container. For example, an annular rim of a cap structure can snap into engagement (or otherwise engage) with a side wall of a cup of welding material, with radial or other cross-members extending from the annular rim to support the ignition charge in a central area of the cup.

In the illustrated example, the cap structure can include a plurality of radial spokes 556a, 556b (i.e., cross-members of the cap structure 550) which can extend inwardly from a periphery of the cap structure 550 to a central hub 558. In the illustrated example, the spokes 556a, 556b are planar, as is the central hub 558, although other configurations are possible. In some examples, including as shown, the central planar hub 558 can have a generally rectangular shape having rounded corners, and the planar spokes 556a, 556b can have different lengths to extend between different sides of the rectangular central planar hub 558. Thus, as shown, planar spokes 556a have a shorter length than planar spokes 556b. In other examples, a central planar hub can have different shapes, including an oval, a circle, a trapezoid, or any other suitable shape. In some examples, including as shown, the planar spokes 556a, 556b can be integrally formed with the planar hub 558 and the bent tabs 552.

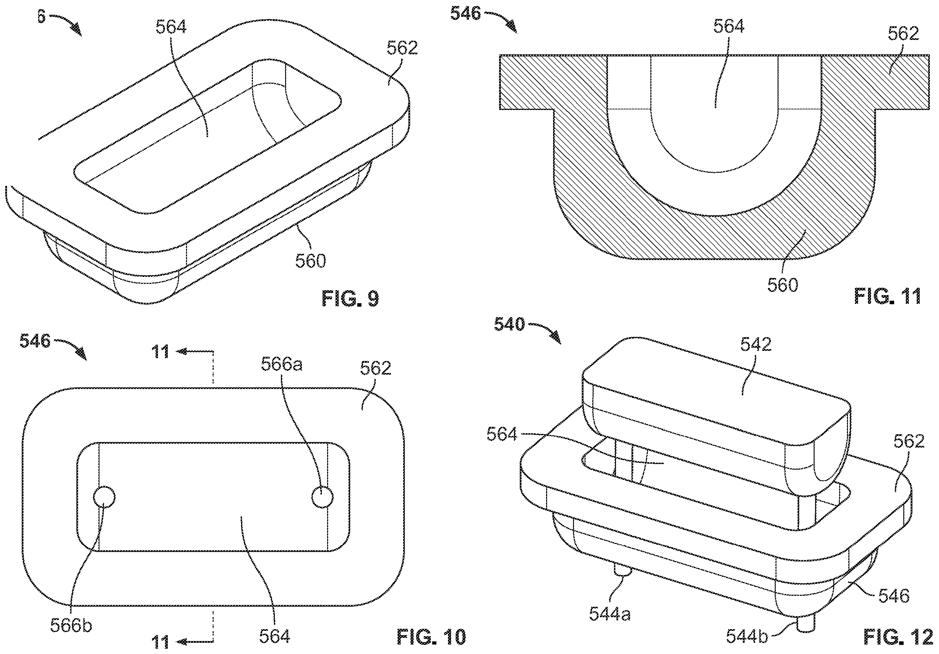

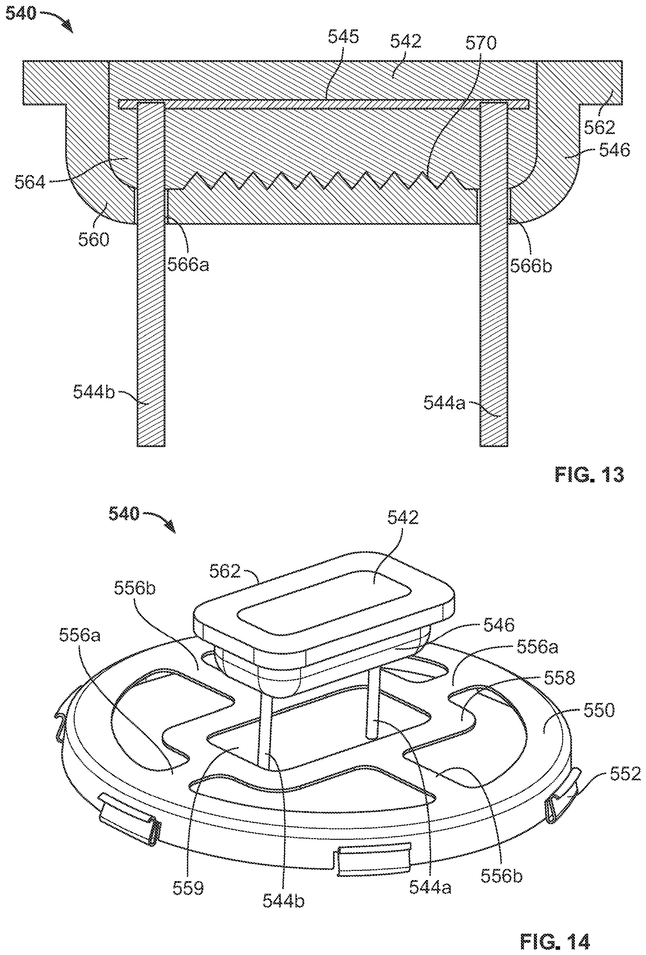

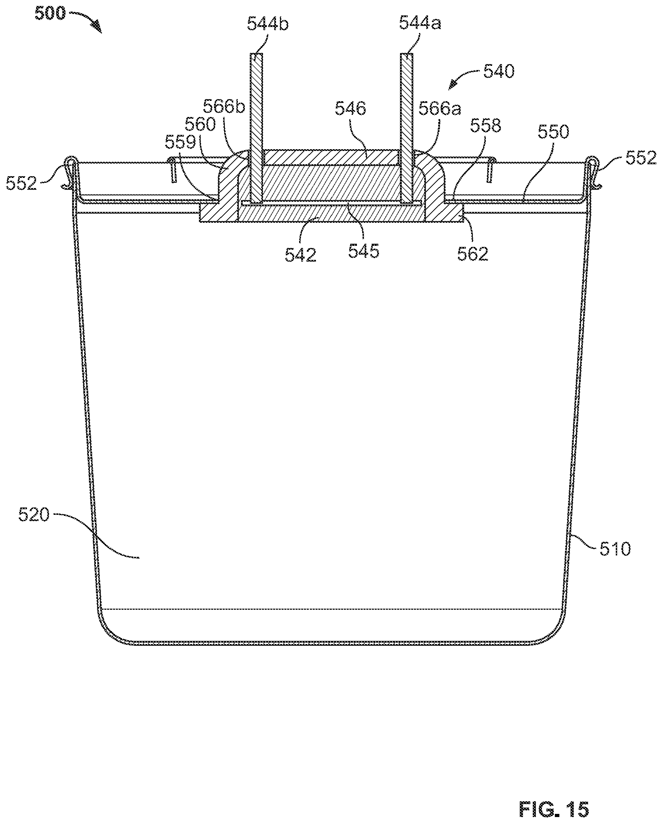

Referring still to FIG. 8, the planar hub 558 can define a central aperture 559 which can receive an igniter assembly 540. In particular, as illustrated, an engagement between the igniter assembly 540 and edges of the planar hub 558 can secure the igniter assembly 540 to the cap structure 550, as least a portion of the igniter assembly 540 extending through the central aperture 559. The igniter assembly 540 can include a mold 546 containing an agglomerated ignition charge (not shown, see, e.g., agglomerated ignition charge 542 in FIGS. 12-15), the agglomerated ignition charge facing into the internal area 520 of the welding container 500. A portion of a body 560 of the mold 546 can extend through the central aperture 559 and can thus extend outwardly relative to the internal area 520 when the cap structure 550 is installed on the cup 510. Wire leads 544a, 544b can extend upwardly through apertures 566a, 566b respectively in the mold 546, and can each be operatively connected to a filament (e.g., filament 545 shown in FIGS. 13 and 15) that is embedded in the agglomerated ignition charge. In some examples, similar other features in a lid structure can similarly support an igniter assembly that does not include a mold, or that includes a differently shaped or oriented mold or ignition charge.

As similarly discussed above, in some examples, the mold 546 can comprise a ceramic material, or graphite, or another non-conductive material. The mold 546 can thus function as a barrier or insulation between conductive elements (e.g., the wire leads 544a, 544b and a filament) of the igniter assembly and conductive portions of the cap structure 550 or the cup 510, including to prevent a short-circuit that could otherwise result from contact between conductive elements of the igniter assembly 540 and the cap structure 550 or cup 510.

In some examples, a mold for containing an ignition charge for an exothermic welding container can be shaped to contain and heat (e.g., bake) a charge therein, and can further include features for engaging a lid (e.g., a cap structure) of an exothermic welding container. For example, as shown in FIGS. 9-11 and also noted above, the mold can include the body 560, which can define a mold cavity with an interior volume 564 for containing an agglomerated ignition charge. Further, a peripheral flange 562 can be positioned at an open end of the interior volume 564, and can extend outwardly from the mold 546 continuously about a periphery thereof. In some examples, a flange of the mold 546 can be positioned opposite an open end of the interior volume 564.

As shown in FIG. 11, the interior volume 564 can have a generally circular cross-sectional profile. In other examples, an interior volume of a mold can have other cross-section profiles, including profiles which could increase or maximize a surface area between an agglomerated ignition charge and the mold, as could advantageously secure the ignition charge within the mold, for example.

In some examples, a mold can include features for accommodating electrical elements of an igniter assembly. For example, as shown in FIG. 10, the apertures 566a, 566b can be defined in the body 560 of the mold 546, and can receive wires or other conductive elements of the ignitor assembly 540. Thus, for example, the wire leads 544a, 544b shown in FIG. 8 can extend from within the interior volume 564 through the apertures 566a, 566b respectively.

As shown in FIG. 11, the interior volume 564 can have a generally semi-circular cross-sectional profile. In other examples, an interior volume of a mold can have other cross-section profiles, including profiles which could increase or maximize a surface area between an agglomerated ignition charge and the mold, as could advantageously secure the ignition charge within the mold, for example.

FIG. 12 illustrates an exploded view of the ignitor assembly 540, including the mold 546, an agglomerated ignition charge 142, and the wire leads 544a, 544b. As shown, the wire leads 544a, 544b can be at least partially received into, and extend from the agglomerated ignition charge 542, which can be contained in the mold 546. Thus, as also generally discussed below, the leads 544a, 544b can be held in position by the mold 546 during heating to form the agglomerated ignition charge 142, so as to ensure appropriate mechanical connection for electrical ignition. Further, in some cases, the leads 544a, 544b can also be thereby held in position for installation and use as an ignitor of a self-contained welding charge (e.g., a sealed cup of welding material, similar to that shown in FIG 5).

In some examples, the agglomerated ignition charge 542 can comprise an agglomeration mixture of a sugar binder (e.g., a sucrose solution, or organic material) and a weld material, as described with respect to the method 400 illustrated in FIG. 6. As shown in the cross-sectional view of the igniter assembly 540 illustrated in FIG. 13, the agglomerated ignition charge 542 can surround and encase a length of a filament 545, which can be in electrical communication with (e.g., integrally formed with) the wire leads 544a, 544b. To assemble the welding container 500, as shown in FIG. 14, the igniter assembly 540 can be positioned relative to the cap structure 550, with the body 560 aligned with the central aperture 559 of the central planar hub 558. As shown in the cross-sectional view of the container 500 in FIG. 15, the peripheral flange 562 can thereby be engaged with the central planar hub 558 to prevent further insertion of the igniter assembly 540 through the cap structure 550. In some cases, a cover similar to the cover 354 (not shown in FIG. 8) can be further secured over the cap structure 440 to prevent egress of welding material during transport, but

In some examples, a flange of a mold for an ignition assembly can be positioned on a side of a lid or cap structure opposing an internal area of a cup, so that gravity brings the flange into engagement with the lid when the lid is installed, and at least a portion of a body of the mold can extend downwardly through the lid into the internal area. When the igniter assembly 540 is installed in the cap structure 550, and the cap structure 550 is installed on the cup 510, the agglomerated ignition charge 542 can face downward into the interior area 520 of the cup 510. Thus, when an electrical current is provided through the wire leads 544a, 544b a current is induced through the filament 545, which can generate heat as a result of that current. The heat produced can ignite the weld material in the agglomerated ignition charge 542, which, due to the influence of gravity, can shower sparks and molten portions of the agglomerated ignition charge 542 onto a main charge of the weld material (not shown) contained in the internal area 520, which can thereby ignite the main charge for completion of an exothermic weld.

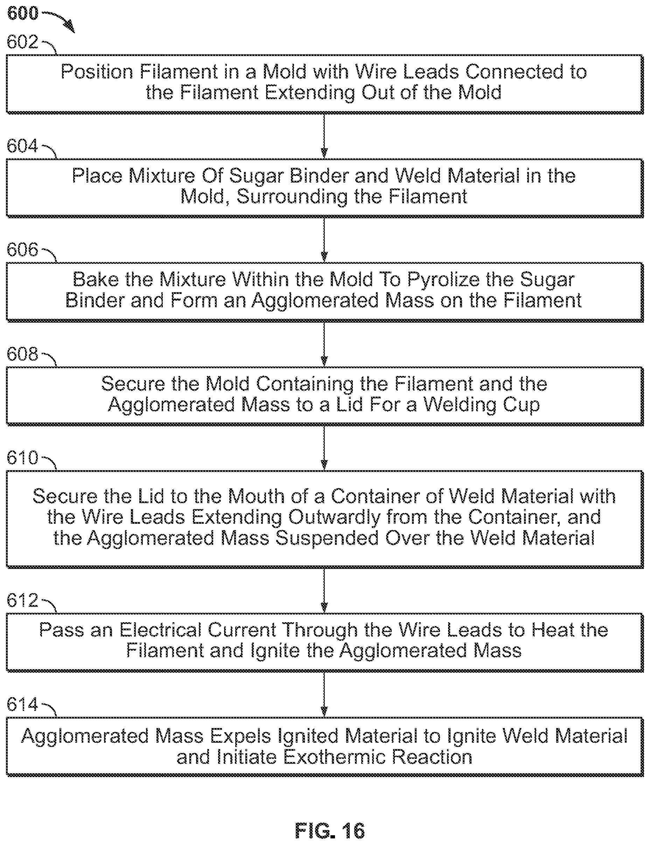

In some examples, the method 600 illustrated in FIG. 16 can be used to assemble or utilize the igniter assembly 540 (or other igniter assemblies). As shown in operation 602, for example, conductive elements of the igniter assembly 540 can be positioned within the mold 546. The conductive elements positioned within the mold 546 can be the filament 545 (e.g., a tungsten filament) and wire leads 544a, 544b electrically connected thereto, as illustrated at least in FIGS. 13 and 15. The wire leads 544a, 544b can be positioned to extend from the interior volume 564 through the apertures 566a, 566b respectively, and the filament can be positioned between the wire leads 544a, 544b within the interior volume 564.

At operation 604, an agglomeration mixture of a sugar binder with the weld material can be placed (e.g., packed) within the interior volume 564, at least partially surrounding the wire leads 544a, 544b, and the filament 545. In some examples, the mixture can occupy the entirety of the volume of the interior volume 564. (However, in some embodiments, no mold may be used and thus no interior volume may be provided.) The mixture can be a liquid, or a powder, or a paste, or a combination thereof, and can be shaped to match a shaped of the interior volume 564. Once the mixture of sugar binder and weld material is placed within the mold 546, the mixture can be baked within the mold 546 (at operation 606) or otherwise appropriately heated, and can thereby be hardened into a solid comprising the agglomerated ignition charge 542. The mold 546 can thus provide a structure for shaping and containing the mixture during a heating process, which can advantageously obviate the need for an additional compressive force to be applied to the mixture during a heating process.

Due to the heating, the sugar can pyrolyze, thereby binding the agglomerated ignition charge 542 to the wire leads 544a 544b and to the filament 545 to form a solid agglomerated mass. In addition to binding the mixture together, and binding the agglomerated ignition charge 542 to the conductive elements 544a, 544b, 545 of the igniter assembly, the pyrolyzed sugar can effectively bind the wired leads 544a, 544b to the filament 545, thus providing a reliable electrical connection for the conductive elements. In other examples, a pyrolyzed sugar binder can also similarly secure other electrical components as needed, including as may otherwise provide a voltage or current signal to ignite an agglomerated ignition charge.

In some examples, the mold 546 can include surface features to enhance a binding of the agglomerated ignition charge 542 to the mold, including a shelf or other elongate protrusion within the interior volume which can increase a surface area to which the pyrolyzed sugar can bind the agglomerated ignition charge 542. In other example, other surface features can be provided including teeth (e.g., triangular or other angled protrusions, circular or other posts, etc.). In this regard, FIG. 13 illustrates an optional example of the mold 546, which, as shown, has a plurality of teeth 570 arranged along a bottom surface of the interior volume 564.

In some examples, it may not be desirable to bind the agglomerated charge 142 to the mold 546, and the agglomerated ignition charge 142 with the wire leads 544a, 544b (or another agglomerated ignition charge) can be removed from the mold 546 to be integrated in an exothermic welding container. For example, the ignition charge 342 can be baked in a mold, then removed from the mold to be integrated in an alternate configuration of the welding container 300, as generally illustrated in FIG. 5 (e.g., in place of part or all of the top assembly that closes the interior area 320, as a replacement for the igniter 340, with or without an integrated filter or as a support or a part of filter media or a filtering structure, etc.).

Still referring to FIG. 16, once the sugar binder and weld material agglomeration mixture has been baked within the mold 546 to produce the agglomerated ignition charge 542, the igniter assembly 540 can be installed in the cap structure 550 of the container 500, the wire leads 544a, 544b extending from the igniter assembly 540 on one side of the cap structure 550, and the peripheral flange 562 being disposed on an opposite side of the cap structure 550 (e.g., as described with respect to FIG. 14). The cap structure 550 can then be secured to the cup 510 with the wire leads 544a, 544b extending away from the internal area 520, and the agglomerated ignition charge 542 facing into the internal area 520, above a main charge of weld material.

Referring still to FIG. 16, at operation 612, to initiate the exothermic reaction, an electrical current can be provided to the wire leads 544a, 544b, which can in tum provide an electrical current through the filament 545. The heat from the filament 545 can heat the agglomerated ignition charge 542, initiating an exothermic reaction in the ignition charge 542. At operation 614, the weld material of the ignition charge 542 can be melted as part of the exothermic reaction, and the molten weld material from the agglomerated ignition charge 542 can fall onto a main charge within the internal area 520, sparking an exothermic reaction of the main charge which can ultimately produce an exothermic weld, as described above.

As with the flowchart presented in FIG. 6, the operations illustrated in FIG. 16 are presented as examples only, as is the order in which the operations are arranged in the flowchart. In some implementations, only select operations of those illustrated may be executed (e.g., only operations 402, 404, 406; only operations 402, 404, 406, 410; only operation 408; only operations 412, 414; only operations 602, 604, 606, 608; only operation 608; only operation 610; only operations 610, 612, 614; or various combinations of these subsets). In some implementations, certain components may be omitted (e.g., a separate cover, a filter, etc.). In some implementations, any of these operations, as applicable, can be executed in different orders, including in parallel with each other.

Thus, examples according to the disclosed technology can provide substantially improved exothermic welding systems and corresponding methods. For example, as generally discussed above, use of disposable containers including integrated filters, electric igniters formed from agglomerated weld material and pyrolyzed sugar binder solution, and other components disclosed herein, can result in cheaper, faster, and more user-friendly welding operations.

The previous description of the disclosed examples is provided to enable any person skilled in the art to make or use the invention. Various modifications to these examples will be readily apparent to those skilled in the art, and the generic principles defined herein may be applied to other examples without departing from the scope of the invention, which is defined by the appended claims.

## Claims

1. A method of forming an ignition system for an exothermic welding system, the method comprising:
providing (402) a binder solution including sugar and water;
combining (404) the binder solution with welding material to form an agglomeration mixture;
forming (404) the agglomeration mixture onto a conductor, to surround at least a portion of the conductor; and **characterized by**:
heating (406) the conductor and the agglomeration mixture to pyrolyze the sugar of the agglomeration mixture, so that the pyrolyzed sugar binds the welding material to the conductor as an agglomerated ignition charge.

2. The method of claim 1, wherein the binder solution has a water to sugar mass ratio of between 1:1 and 2:1.

3. The method of claim 1, wherein the agglomeration mixture has a binder solution to welding material mass ratio of between 0.10 and 0.30.

4. The method of claim 1, wherein heating (406) the agglomeration mixture includes:
heating the agglomeration mixture to at least 176.6 degrees Celsius for between 3 and 9 hours.

5. The method of claim 1, wherein heating the agglomerated mixture includes:
baking (606) the agglomerated mixture within a mold.

6. The method of claim 5, further comprising:
integrating the mold into a welding cup that includes an internal area containing a predetermined amount of welding material ignited by the ignition charge.

7. The method of claim 6, further comprising:
securing (608) the mold at or in the internal area of the cup to position the ignition charge above the welding material to ignite the amount of welding material.

8. The method of claim 1, wherein the conductor is arranged for an electrical current to pass through the conductor to ignite the ignition charge.

9. An exothermic welding system, comprising (100, 450):
a welding cup (510) defining an internal area (520);
a first charge of welding material within the internal area; and
an igniter (540), including:
a conductor; and
an agglomerated ignition charge (542) formed around a portion of the conductor, **characterized in that** the agglomerated ignition charge is formed of a combination of a pyrolyzed binder solution and a second charge of welding material,
wherein the pyrolyzed binder solution includes pyrolyzed sugar.

10. The exothermic welding system of claim 9, wherein the agglomerated ignition charge is formed within a mold (546).

11. The exothermic welding system of claim 9, further comprising: a filter (330) arranged adjacent an opening of the welding cup.

12. The exothermic welding system of claim 11, wherein the agglomerated ignition charge is positioned below the filter.

13. The exothermic welding system of claim 9, wherein the ignition charge is positioned within the internal area of the welding cup above the first charge of welding material.

14. The exothermic welding system of claim 13, wherein the ignition charge is ignitable via an electrical current passed through the conductor to ignite the second charge of welding material.

15. The exothermic welding system of claim 13, wherein the ignition charge is positioned above the first charge of welding material so that ignited weld material from the agglomerated ignition charge falls upon the main charge under the influence of gravity.

## Patentansprüche

1. Verfahren zum Formen eines Zündsystems für ein exothermes Schweißsystem, wobei das Verfahren Folgendes umfasst:
Bereitstellen (402) einer Bindemittellösung, die Zucker und Wasser beinhaltet;
Kombinieren (404) der Bindemittellösung mit Schweißmaterial, um ein Agglomerationsgemisch zu formen;
Formen (404) des Agglomerationsgemischs auf einem Leiter, um mindestens einen Teil des Leiters zu umgeben; und durch Folgendes gekennzeichnet ist:
Erwärmen (406) des Leiters und des Agglomerationsgemischs, um den Zucker des Agglomerationsgemischs zu pyrolysieren, sodass der pyrolysierte Zucker das Schweißmaterial als eine agglomerierte Zündladung an den Leiter bindet.

2. Verfahren nach Anspruch 1, wobei die Bindemittellösung ein Massenverhältnis von Wasser zu Zucker zwischen 1:1 und 2:1 aufweist.

3. Verfahren nach Anspruch 1, wobei das Agglomerationsgemisch ein Massenverhältnis von Bindemittellösung zu Schweißmaterial zwischen 0,10 und 0,30 aufweist.

4. Verfahren nach Anspruch 1, wobei das Erwärmen (406) des Agglomerationsgemischs Folgendes beinhaltet:
Erwärmen des Agglomerationsgemischs auf mindestens 176,6 Grad Celsius für 3 bis 9 Stunden.

5. Verfahren nach Anspruch 1, wobei das Erwärmen des agglomerierten Gemischs Folgendes beinhaltet:
Backen (606) des agglomerierten Gemisches innerhalb einer Form.

6. Verfahren nach Anspruch 5, ferner umfassend:
Integrieren der Form in eine Schweißdüse, die einen Innenbereich beinhaltet, der eine vorbestimmte Menge an Schweißmaterial enthält, die durch die Zündladung gezündet wird.

7. Verfahren nach Anspruch 6, ferner umfassend:
Befestigen (608) der Form an oder in dem Innenbereich der Düse, um die Zündladung über dem Schweißmaterial zu positionieren, um die Menge an Schweißmaterial zu zünden.

8. Verfahren nach Anspruch 1, wobei der Leiter dazu angeordnet ist, dass ein elektrischer Strom durch den Leiter fließt, um die Zündladung zu zünden.

9. Exothermes Schweißsystem, umfassend (100, 450):
eine Schweißdüse (510), die einen Innenbereich (520) definiert;
eine erste Ladung aus Schweißmaterial innerhalb des Innenbereichs; und
einen Zünder (540), beinhaltend:
einen Leiter; und
eine agglomerierte Zündladung (542), die um einen Abschnitt des Leiters geformt ist, **dadurch gekennzeichnet, dass** die agglomerierte Zündladung aus einer Kombination einer pyrolysierten Bindemittellösung und einer zweiten Ladung aus Schweißmaterial geformt ist,
wobei die pyrolysierte Bindemittellösung pyrolysierten Zucker beinhaltet.

10. Exothermes Schweißsystem nach Anspruch 9, wobei die agglomerierte Zündladung innerhalb einer Form (546) geformt wird.

11. Exothermes Schweißsystem nach Anspruch 9, ferner umfassend: ein Filter (330), das angrenzend an eine Öffnung der Schweißdüse angeordnet ist.

12. Exothermes Schweißsystem nach Anspruch 11, wobei die agglomerierte Zündladung unterhalb des Filters positioniert ist.

13. Exothermes Schweißsystem nach Anspruch 9, wobei die Zündladung innerhalb des Innenbereichs der Schweißdüse über der ersten Ladung aus Schweißmaterial positioniert ist.

14. Exothermes Schweißsystem nach Anspruch 13, wobei die Zündladung über einen elektrischen Strom zündbar ist, der durch den Leiter fließt, um die zweite Ladung aus Schweißmaterial zu zünden.

15. Exothermes Schweißsystem nach Anspruch 13, wobei die Zündladung über der ersten Ladung aus Schweißmaterial positioniert ist, sodass gezündetes Schweißmaterial aus der agglomerierten Zündladung unter dem Einfluss der Schwerkraft auf die Hauptladung fällt.

## Revendications

1. Procédé de formation d'un système d'allumage pour un système de soudage exothermique, le procédé comprenant :
la fourniture (402) d'une solution de liant comprenant du sucre et de l'eau ;
la combinaison (404) de la solution de liant avec un matériau de soudage pour former un mélange d'agglomération ;
la formation (404) du mélange d'agglomération sur un conducteur, afin d'entourer au moins une partie du conducteur ; et **caractérisé par** :
le chauffage (406) du conducteur et du mélange d'agglomération pour pyrolyser le sucre du mélange d'agglomération, de sorte que le sucre pyrolysé lie le matériau de soudage au conducteur sous la forme d'une charge d'allumage agglomérée.

2. Procédé selon la revendication 1, dans lequel la solution de liant présente un rapport massique entre l'eau et le sucre compris entre 1:1 et 2:1.

3. Procédé selon la revendication 1, dans lequel le mélange d'agglomération présente un rapport massique entre la solution de liant et le matériau de soudage compris entre 0,10 et 0,30.

4. Procédé selon la revendication 1, dans lequel le chauffage (406) du mélange d'agglomération comprend l'étape consistant à :
chauffer le mélange d'agglomération à au moins 176,6 degrés Celsius pendant une durée comprise entre 3 et 9 heures.

5. Procédé selon la revendication 1, dans lequel le chauffage du mélange aggloméré comprend l'étape consistant à :
cuire (606) le mélange aggloméré à l'intérieur d'un moule.

6. Procédé selon la revendication 5, comprenant en outre l'étape consistant à :
intégrer le moule dans un creuset de soudage qui comprend une zone interne contenant une quantité prédéterminée de matériau de soudage destinée à être enflammée par la charge d'allumage.

7. Procédé selon la revendication 6, comprenant en outre l'étape consistant à :
fixer (608) le moule au niveau ou à l'intérieur de la zone interne du creuset pour positionner la charge d'allumage au-dessus du matériau de soudage afin d'enflammer ladite quantité de matériau de soudage.

8. Procédé selon la revendication 1, dans lequel le conducteur est agencé de sorte qu'un courant électrique traverse le conducteur afin d'allumer la charge d'allumage.

9. Système de soudage exothermique, comprenant (100, 450) :
un creuset de soudage (510) définissant une zone interne (520) ;
une première charge de matériau de soudage à l'intérieur de la zone interne ; et
un allumeur (540), comprenant :
un conducteur ; et
une charge d'allumage agglomérée (542) formée autour d'une partie du conducteur, **caractérisé en ce que** la charge d'allumage agglomérée est formée d'une combinaison d'une solution de liant pyrolysée et d'une seconde charge de matériau de soudage,
dans lequel la solution de liant pyrolysée comprend du sucre pyrolysé.

10. Système de soudage exothermique selon la revendication 9, dans lequel la charge d'allumage agglomérée est formée à l'intérieur d'un moule (546).

11. Système de soudage exothermique selon la revendication 9, comprenant en outre : un filtre (330) agencé de façon adjacente à une ouverture du creuset de soudage.

12. Système de soudage exothermique selon la revendication 11, dans lequel la charge d'allumage agglomérée est positionnée sous le filtre.

13. Système de soudage exothermique selon la revendication 9, dans lequel la charge d'allumage est positionnée à l'intérieur de la zone interne du creuset de soudage au-dessus de la première charge de matériau de soudage.

14. Système de soudage exothermique selon la revendication 13, dans lequel la charge d'allumage est apte à être allumée par l'intermédiaire d'un courant électrique traversant le conducteur pour enflammer la seconde charge de matériau de soudage.

15. Système de soudage exothermique selon la revendication 13, dans lequel la charge d'allumage est positionnée au-dessus de la première charge de matériau de soudage de sorte qu'un matériau de soudage enflammé provenant de la charge d'allumage agglomérée tombe sur la charge principale sous l'effet de la gravité.
